# EUROPEAN PATENT APPLICATION

(11) **EP 3 130 261 A1**
(43) Date of publication of application: **15.02.2017**
(21) Application number: 15776897.9
(22) Date of filing: 03.03.2015
(51) Int. Cl.: A47J 19/06, A47J 19/02, A47J 43/044

(54) **TOP DRIVE TYPE JUICER**

(30) Priority: 10.04.2014 KR 20140042889
(71) Applicant: Kim, Jae-Won, Gyeongsangnam-do 51015 (KR)
(72) Inventor: KIM, Young Ki, Gimhae-si Gyeongsangnam-do 51006 (KR)
(74) Representative: Wallinger, Michael
(86) International application number: PCT/KR2015/002012
(87) International publication number: WO 2015/156503

(57) **Abstract**

Disclosed is an upper powered type juice squeezing extractor including: a body having driving force generating means and a juice squeezing drum seating part disposed on one side thereof; a juice squeezing drum mounted on the juice squeezing drum seating part and open on the top surface thereof; a cap adapted to cover the open top surface of the juice squeezing drum and having a communication hole formed at the center thereof; a screw having a plurality of screw spiral lines formed on the outer peripheral surface thereof and a power connector disposed on the top end periphery thereof so as to receive a driving force generated from the driving force generating means; and a power transmission module having one end connected to the driving force generating means and the other end connected to the power connector so as to transmit the driving force generated from the driving force generating means to the screw.

## Description

### [Technical Field]

The present invention relates to a juice squeezing extractor, and more particularly, to an upper powered type juice squeezing extractor that is capable of improving a mounting position and an elevating structure of a driving shaft.

### [Background Art]

With the high interest in wellbeing and organic products, generally, many peoples drink the juice extracted from vegetables, fruits, or grains in their houses. Accordingly, many studies and developments on juicers used in houses have been continously made. Referring to general structures of the juicers currently sold in the market and developed, a motor providing a rotary force is mounted under a juice squeezing drum, and a driving shaft of the motor is passed through the underside of the juice squeezing drum and fastened to the underside of a screw, thus transmitting the rotary force to the screw. An example of such juice squeezing extractor is disclosed in Korean Patent No.793852 entitled 'juice extractor'.

According to such conventional lower-powered juice squeezing extractor, if a packing disposed between the juice squeezing drum and the driving shaft of the motor or between the screw and the driving shaft of the motor so as to prevent juice from leaking to the outside is aged or damaged, the juice strongly compressed downwardly is soaked into the packing and thus leaks to the outside of the juice squeezing drum. This causes the outer surface of the juice squeezing extractor to be polluted, and further, if the juice enters the motor to which power is applied, accidents by electric shocks or short circuits or malfunctions may be generated. Furthermore, since the driving shaft of the motor is located at the center of the underside of the juice squeezing drum, the location, structure and size of a remnant discharging hole may be limitedly formed, which makes the size of the remnant discharging hole relatively small. As a result, the remnants are not discharged gently to undesirably lower the juice extraction efficiency.

### [Disclosure]

### [Technical Problem]

Accordingly, the present invention has been made in view of the above-mentioned problems occurring in the prior art, and it is an object of the present invention to provide an upper powered type juice squeezing extractor that is capable of improving the space utilization under a juice squeezing drum and designing the structure under the juice squeezing drum in various and unlimited ways, thus achieving gentle remnant discharging and high juice extraction efficiency.

It is another object of the present invention to provide an upper powered type juice squeezing extractor that is capable of easily detachably mounting a juice squeezing drum on a body, thus improving a user's conveniences.

It is yet another object of the present invention to provide an upper powered type juice squeezing extractor that is capable of improving the coupling force between a juice squeezing drum seating part and a juice squeezing drum.

### [Technical Solution]

To accomplish the above-mentioned objects, according to the present invention, there is provided an upper powered type juice squeezing extractor including: a body having driving force generating means and a juice squeezing drum seating part disposed on one side thereof; a juice squeezing drum mounted on the juice squeezing drum seating part and open on the top surface thereof; a cap adapted to cover the open top surface of the juice squeezing drum and having a communication hole formed at the center thereof; a screw having a plurality of screw spiral lines formed on the outer peripheral surface thereof and a power connector disposed on the top end periphery thereof so as to receive a driving force generated from the driving force generating means; and a power transmission module having one end connected to the driving force generating means and the other end connected to the power connector so as to transmit the driving force generated from the driving force generating means to the screw.

According to the present invention, preferably, the power transmission module includes a plurality of combined gears disposed on one end thereof in such a manner as to be sequentially connected to a rotary shaft of the driving force generating means; and an upwardly and downwardly movable elevating part mounted at the other end thereof in such a manner as to be fastened or separated to/from the power connector of the screw.

According to the present invention, preferably, the elevating part includes: a shaft having one end fastenable and separable to/from the power connector of the screw; a shaft guide having shaft guide grooves formed on one side thereof so as to guide upward and downward movements of the shaft and gear teeth formed on the outer peripheral surface of the other side thereof so as to receive the driving force from the driving force generating means; a spring having one end supported against the shaft and the other end supported against the shaft guide to allow the shaft to receive the elastic force thereof in a downward direction; and an adjustor connected to the other end of the shaft passed through the shaft guide so as to adjust the fastening or separation between the shaft and the power connector.

According to the present invention, preferably, the adjustor includes: an operating member coupled to the other end of the shaft and having an operating protrusion formed on one side thereof so as to induce the upward and downward movements of the shaft; an adjusting guide having an adjusting guide groove formed on one side thereof in such a manner as to insert the operating protrusion thereinto so as to guide the upward and downward movements of the operating member; and an adjusting drum rotatable in the state of inserting the adjusting guide thereinto and having an inclined surface formed on one side of the top end periphery thereof in such a manner as to move up and down the operating protrusion in accordance with the left and right rotation thereof and an ascending fixing projection formed on the uppermost end of the inclined surface so as to move up and fix the operating protrusion.

According to the present invention, preferably, the operating member, the adjusting guide and the adjusting drum of the adjustor have a symmetrical structure in the left and right sides thereof.

According to the present invention, preferably, the juice squeezing drum seating part has one or more coupling projections or coupling grooves formed on the top surface thereof, and the juice squeezing drum has one or more coupling grooves or coupling projections formed on the underside thereof at the corresponding positions to the coupling projections or coupling grooves, so that the juice squeezing drum and the juice squeezing drum seating part are fastened to each other.

According to the present invention, preferably, the juice squeezing drum seating part has coupling guide projections formed on the top surface thereof, the coupling guide projections being increased in the protruding widths in an insertion direction of the juice squeezing drum, and the juice squeezing drum has coupling guide grooves formed on the underside thereof at the corresponding positions to the coupling guide projections.

According to the present invention, preferably, the cap has a material injection hole penetratedly formed therethrough so as to allow materials to be extracted to be injected into the juice squeezing drum, the material injection hole being inclinedly formed.

According to the present invention, preferably, the juice squeezing drum includes: a remnant discharging hole formed at the center of the underside thereof in such a manner as to correspond to the lower end periphery of the screw disposed in the interior thereof; and a juice discharging hole formed on one side thereof.

According to the present invention, preferably, the juice squeezing drum includes: a screen drum accommodated thereinto and open on the top and underside thereof so as to surround the outer peripheral surface of the screw, the screen drum having a remnant descending hole formed on one side of the underside thereof; and a remnant discharging hole formed on the underside thereof in such a manner as to communicate with the remnant descending hole.

According to the present invention, preferably, the remnant discharging hole is penetratedly formed downwardly from the underside of the juice squeezing drum.

According to the present invention, preferably, the juice squeezing drum has a juice discharging hole formed on the outside of the region where the screen drum is mounted on the underside thereof in such a manner as to be spaced apart from the remnant discharging hole.

According to the present invention, preferably, the juice discharging hole is penetratedly formed downwardly from the underside of the juice squeezing drum.

According to the present invention, preferably, the juice squeezing drum has opening and closing means mounted on the juice discharging hole so as to open and close the juice discharging hole.

According to the present invention, preferably, the screen drum or the juice squeezing drum has a packing or opening and closing means mounted on the remnant descending hole or the remnant discharging hole so as to control remnant discharging.

### [Advantageous Effects]

According to the present invention, the driving motor is mounted on the side portion (or the lower portion with respect to the side portion) of the juice squeezing drum, and the driving motor and the screw are connected by means of the power transmission module disposed on the body and the cap, so that the space utilization under the juice squeezing drum can be improved and the structure under the juice squeezing drum can be designed in various and unlimited ways, thus achieving gentle remnant discharging and high juice extraction efficiency.

In addition, the upwardly and downwardly movable elevating part is provided at the power transmission module connected to the screw, so that the juice squeezing drum can be easily detachably mounted on the body, thus improving a user's conveniences.

Further, the coupling projection (or coupling groove) and the coupling guide projections (or coupling guide grooves) are formed on the top surface of the juice squeezing drum seating part, and the coupling groove (or coupling projection) and the coupling guide grooves (coupling guide projections) are formed on the underside of the juice squeezing drum at the corresponding positions to the coupling projection and the coupling guide projection, so that the coupling force between the juice squeezing drum seating part and the juice squeezing drum can be improved.

The effects of the invention are of course obtained by the configuration of the invention irrespective of the inventor's recognition. Therefore, the above-mentioned effects are just obtained according to the present invention, but further, it should be noted that other effects may be obtained through the inventor's recognition. Accordingly, the effects of the invention have to be additionally recognized according to the whole description of the invention, and even if they are not described with explicit sentences, it should be understood that they are considered as those contained in the description only if an ordinary skilled in the art recognizes that they are obtained through the invention.

### [Description of Drawings]

FIG.1 is a sectional view showing an upper powered type juice squeezing extractor according to a first embodiment of the present invention.
FIG.2a is an exploded perspective view showing an elevating part of the upper powered type juice squeezing extractor according to the first embodiment of the present invention.
FIG.2b is a perspective view showing the assembled state of the elevating part of the upper powered type juice squeezing extractor according to the first embodiment of the present invention.
FIG.3a is a perspective view showing a juice squeezing drum seating part of the upper powered type juice squeezing extractor according to the first embodiment of the present invention.
FIG.3b is a perspective view showing the underside of a juice squeezing drum of the upper powered type juice squeezing extractor according to the first embodiment of the present invention.
FIG.4 is a sectional view showing the assembled state of a juice squeezing drum of an upper powered type juice squeezing extractor according to a second embodiment of the present invention.
FIG.5 is a sectional view taken along the line A-A of FIG.4.
FIG.6 is a perspective view showing the upper powered type juice squeezing extractor according to the second embodiment of the present invention.

### [Mode for Invention]

Hereinafter, an explanation on an upper powered type juice squeezing extractor according to the present invention will be in detail given with reference to the attached drawings. In the description, the terms as will be discussed later are defined in accordance with the functions of the present invention, but may be varied under the intention or regulation of a user or operator. Therefore, they should be defined on the basis of the whole scope of the present invention. While the present invention will be described with reference to the particular illustrative embodiments, it is not to be restricted by the embodiments. It is to be appreciated that those skilled in the art can change or modify the embodiments without departing from the scope and spirit of the present invention.

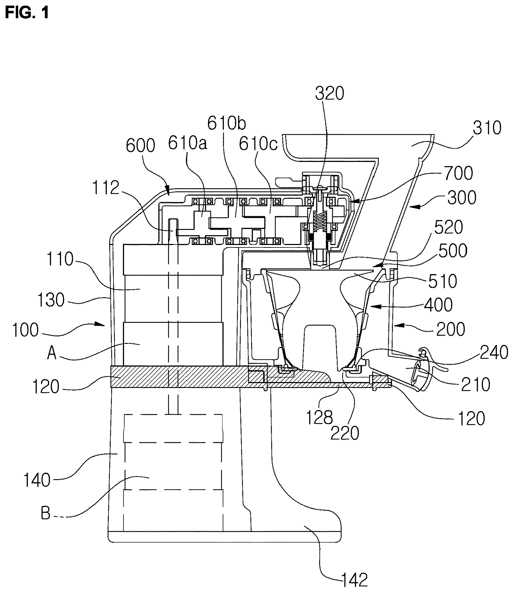

As shown in FIG.1, an upper powered type juice squeezing extractor according to the present invention includes a body 100, a juice squeezing drum 200, a cap 300, a screen drum 400, and a screw 500.

The body 100 has a driving motor 110 as driving power generating means and a juice squeezing drum seating part 120, and the driving motor 110 has a rotary shaft 112 protruded upwardly therefrom, from which driving power is provided to rotate the screw 500 as will be discussed later at a low speed. The driving motor 110 can be freely selected in accordance with the shapes or use purposes of the juice squeezing extractor.

The driving motor 110 is disposed at the inside of the body 100 corresponding to the side portion A of the juice squeezing drum 200 as will be discussed later or at a lower portion B than the side portion A of the juice squeezing drum 200, not just over the juice squeezing drum 200 or just under the juice squeezing drum 200. As a result, the center of the weight of the body 100 is lowered and the balance of the left and right weights thereof is maintained, thus preventing the generation of vibrations while the driving motor 110 is being operated.

In more detail, the body 100 includes an upper body 130 connected to a power transmission module 600 as will be discussed later and a lower body 140 contacted with the ground and having support legs 142 protruded along the ground therefrom so as to support the body 100.

At this time, the driving motor 110 may be disposed at the inside of the upper body 130 or the lower body 140, which is selected by a manufacturer in accordance with the space utilization of the lower body side and the protruded lengths of the support legs 142. That is, if the driving motor 110 is disposed at the inside of the upper body 130 so as to utilize the space formed in the lower body 140, the center of the weight of the body 100 is formed higher than that when the driving motor 110 is disposed at the inside of the lower body 140, and accordingly, the protruded lengths of the support legs 142 are increased to prevent the generation of vibrations of the driving motor 110 at the same level as each other.

The juice squeezing drum seating part 120 serves to supportedly mount the juice squeezing drum 200 on the body 100 and is disposed at one side of the body 100. Only if the juice squeezing drum seating part 120 stably supports the juice squeezing drum 200 in the state of being spaced apart from the ground by a given distance, it does not matter in shape.

According to the present invention, however, the juice squeezing drum seating part 120 has a plate-like shape corresponding to the underside of the juice squeezing drum 200 on the horizontal plane in such a manner as to be protruded outwardly from one side of the body 100 and has an opening 128 formed at the center thereof in such a manner as to communicate with a remnant discharging hole 220.

That is, the juice squeezing drum seating part 120 is disposed between the upper body 130 and the lower body 140 to support the juice squeezing drum 200, and a container (not shown) is located below the opening 128 so as to collect remnants.

The juice squeezing drum 200 is mounted on the juice squeezing drum seating part 120 disposed on one side of the body 100 and open on the top surface thereof in such a manner as to accommodate the screw 500 and the screen drum 400 thereinto.

The juice squeezing drum 200 has a juice discharging hole 210 and the remnant discharging hole 220 formed on the lower portion thereof in such a manner as to be spaced apart from each other, and according to the present invention, the juice discharging hole 210 has a shape of a pipe having an open front surface, through which juice can be easily discharged.

Further, the remnant discharging hole 220 is formed on the lower end of the juice squeezing drum 200 in a shape of a through hole corresponding to the underside of the screw 500. At this time, the remnant discharging hole 220 forms a ring-shaped space made when the lower end periphery of the screw 500 comes close to the lower end periphery of the juice squeezing drum 200, and a remnant packing 240, which is freely changed in shape, is mounted at a position capable of opening and closing the remnant discharging hole 220 in accordance with its elasticity, thus controlling remnant discharging.

Like this, the center of the lower end periphery of the juice squeezing drum 200 at which the driving shaft of the motor in the conventional practice is located is designed structurally according to the present invention, so that the remnants can be discharged through the ring-shaped space along the remnant discharging hole 220, thus achieving regular and smooth discharging. This also enhances the juice squeezing efficiency and the quality of extracted juice.

The cap 300 has an underside shape corresponding to the top surface of the juice squeezing drum 200 so as to cover the open top surface of the juice squeezing drum 200 and is open on the underside thereof, having a cylindrical material injection hole 310 protruded upwardly from one side of the top surface thereof in such a manner as to be connected to the open underside surface of the cap 300 and open on the top surface thereof so as to allow extraction materials to be injected thereinto.

Further, the cap 300 has a communication hole 320 adapted to connect a power connector 520 fitted to the top end periphery of the screw 500 and the power transmission module 600 in a cooperatively dynamic manner. At this time, the communication hole 320 is desirably formed at the center of the cap 300, and the material injection hole 310 is formed at a position eccentric by a given distance from the center of the communication hole 320, so that the rotation of the screw 500 and the injection of the materials can be gently achieved.

The screen drum 400 is mounted at the inside of the juice squeezing drum 200 and open on the top and underside thereof. The screen drum 400 becomes reduced in diameter as it goes toward the lower portion thereof. The screen drum 400 has a side peripheral wall having a plurality of screen holes adapted to allow the juice extracted through the compression and squeezing or grinding between the screw 500 and the screen drum 400 from the materials injected into the juice squeezing drum 200 through the material injection hole 310, as the screw 500 is rotated, to be discharged to the outside thereof.

The juice is discharged through the side peripheral wall of the screen drum 400, and the remnants of the materials after the squeezing through the cooperative operation between the screw 500 and the screen drum 400 are discharged to the lower portion of the screen drum 400. According to the present invention, the underside of the screen drum 400 is open, through which the remnant is gently discharged directly to the remnant discharging hole 220.

Accordingly, the remnants of the materials containing long or tough fibers can be smoothly discharged, and after extracting, the materials do not stay at the inside of the screen drum 400, thus reducing the loss of the materials. Further, the cap 300 can be conveniently separated from the juice squeezing drum 200, without any trouble.

The screw 500 is rotatably mounted at the inside of the screen drum 400 to compress or grind the injected materials between the screw 500 and the screen drum 400 through the rotation thereof, so as to extract the juice from the materials. The screw 500 has a plurality of screw spiral lines 510 formed on the outer peripheral surface thereof so as to grind the injected materials through the contact with the inner peripheral surface of the screen drum 400 and to compressedly move the grinded materials toward the lower end side of the screen drum 400.

Further, the power connector 520 is disposed on the top end periphery of the screw 500 so as to transmit the driving force generated from the driving motor 110 to the screw 500 through the power transmission module 600. Only if the power connector 520 is fastened to the other end of the power transmission module 600 in the opposite direction to one end thereof connected to the driving motor 110 and transmits the driving drive to the screw 500, it does not matter in shape.

According to the present invention, a polygonal column-shaped shaft 710 is disposed at the other end of the power transmission module 600, and the power connector is configured to have grooves having the shapes corresponding to the polygonal column-shaped shaft 710 formed along the top surface of the screw 500.

So as to allow the shaft 710 mounted at the other end of the power transmission module 600 to be detachably mounted onto the power connector 520 having the grooves corresponding to the shaft 710, at this time, chamfering is conducted on the end peripheries of the shaft 710 and the grooves adjacent to each other. Furthermore, the shaft 710 may be tapered toward the contacted portion with the power connector 520.

Contrarily, the power connector 520 of the screw 500 may have a shape of a polygonal column protruded upwardly therefrom, and the other end of the power transmission module 600 may have grooves having the shape corresponding to the polygonal column of the power connector 520, thus dynamically connecting them.

The power transmission module 600 is mounted on the body 100 and the cap 300 and has one end connected to the driving motor 110 and the other end connected to the power connector 520, so as to transmit the driving force of the driving motor 110 to the screw 500.

The power transmission module 600 includes gears 610 having a plurality of combined gears 610a to 610c formed on one end thereof in such a manner as to be sequentially connected to the rotary shaft 112 of the driving motor 110. At this time, the gears 610a to 610c are formed in the combination of various gears, such as bevel gears, screw gears, cylindrical worm gears, and gears with parallel axes in accordance with the sizes of the juice squeezing extractor, the hardness of generally used materials, and the gear ratio.

According to the present invention, however, the gears 610a to 610c are engaged with each other so as to conduct gearing with the rotary shaft 112 of the driving motor 110 and thus to transmit stable and regular rotary force to the other end of the power transmission module 600.

The formation of the power transmission module 600 enables the driving motor 110 to be disposed at the inside of the body 110 corresponding to the side portion A of the juice squeezing drum 200 or at the lower portion B than the side portion A.

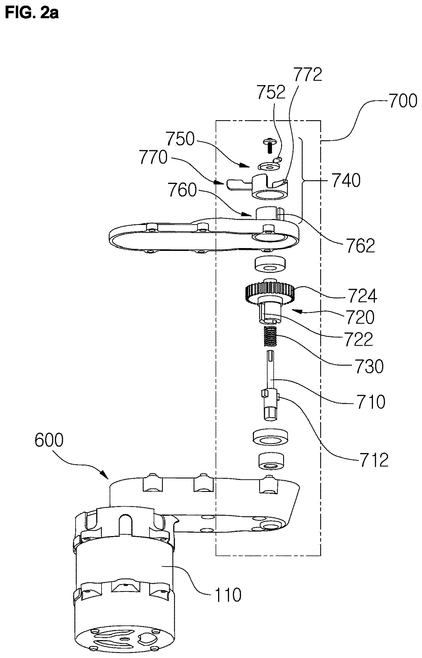

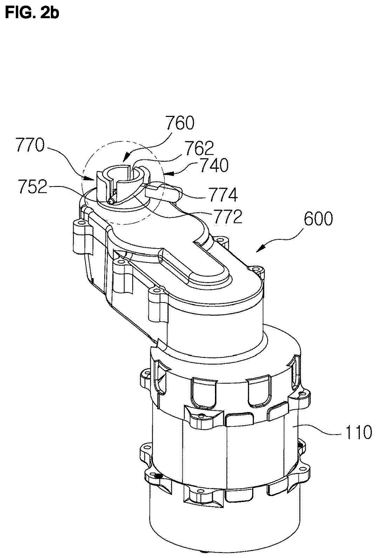

On the other hand, as shown in FIGS.2a and 2b, an upwardly and downwardly movable elevating part 700 is mounted at the other end of the power transmission module 600 in such a manner as to be fastened or separated to/from the power connector 520 of the screw 500.

If the other end of the power transmission module 600 is moved upwardly by means of the elevating part 700, the juice squeezing drum 200 is easily mounted on the juice squeezing drum seating part 120, and thus, the connection between the power connector 520 of the screw 500 and the other end of the power transmission module 600 is released, so that since the driving force of the driving motor 110 is not transmitted, the elevating part 700 serves as a safety device.

The elevating part 700 may be operated in variable ways, and even if not shown, for example, it may move the entire power transmission module upwardly and downwardly. Alternatively, the elevating part has a hinge shaft as the power transmission module adjacent to the upper body and the driving motor and thus rotatably moves the power transmission module upwardly and downwardly around the hinge shaft. At this time, a mechanism is actuated wherein the rotary shaft of the driving motor is spaced apart from the gear adjacent thereto, so that when the power transmission module is rotated upwardly, no interference between the rotary shaft of the driving motor and the gear adjacent thereto occurs, and otherwise, the end surface of the gear may be curvedly formed so as to minimize the interference between the rotary shaft and the gear adjacent thereto.

According to the present invention, the elevating part 700 includes the shaft 710, a shaft guide 720, a spring 730, and an adjustor 740.

The shaft 710 serves as a part which finally transmits the driving force of the driving motor 110 to the screw 500 and has a shape of a general bar. In more detail, the shaft 710 has one end having the polygonal column-like shape fastenable and separable to/from the power connector 520 of the screw 500 and the other end sequentially passed through the spring 730 and the shaft guide 720 as will be discussed later and coupled to one side of the adjustor 740.

The shaft guide 720 serves to guide the upward and downward movements of the shaft 710 and at the same time receive the driving force transmitted from the driving motor 110 to rotate the shaft 710 and has a generally cylindrical shape.

The shaft guide 720 has shaft guide grooves 722 formed longitudinally in upward and downward directions on one side thereto adjacent to the shaft 710, and in the state where shaft protrusions 712 formed on the shaft 710 are fittedly inserted into the shaft guide grooves 722, the shaft 710 is guided upwardly and downwardly. The shaft guide 720 further has gear teeth 724 formed on the outer peripheral surface of the other side thereof in the opposite direction to the shaft guide grooves 722 so as to receive the driving power from the driving motor 110.

The spring 730 is a part providing an elastic force so that the shaft 710 is kept downwardly. The spring 730 is located between the shaft 710 and the shaft guide 720 and has one end supporting the shaft 710 and the other end supporting the shaft guide 720, so that the shaft 710 receives the elastic force (the pressure) of the spring 730 in the downward direction. If the polygonal-shaped shaft formed on the lower end periphery of the shaft 710 does not correspond to the polygonal-shaped shaft hole formed on the top end periphery of the screw 500, and otherwise, if the polygonal-shaped shaft is not fitted to the polygonal-shaped shaft hole by means of any other reason, the polygonal-shaped shaft is rotated by means of the elastic force of the spring 730, thus being just fitted to the polygonal-shaped shaft hole. That is, the formation of the spring 730 enables the polygonal-shaped shaft to be rotated and inserted just into the polygonal-shaped shaft hole. In this case, desirably, the polygonal-shaped shaft is a hexagonal shaft, and the polygonal-shaped shaft hole corresponding to the hexagonal shaft is a hexagonal shaft hole. Of course, they may become a square shaft and a square shaft hole. To the contrary, the polygonal-shaped shaft hole may be formed on the lower end periphery of the shaft 710 and the polygonal-shaped shaft fitted to the polygonal-shaped shaft hole may be formed on the top end periphery of the screw 500.

The adjustor 740 is a part that adjusts the fastening or separation between the shaft 710 and the power connector 520 and is connected to the other end of the shaft 710 passed through the shaft guide 720. The fastening or separation between the shaft 710 and the power connector 520 through the adjustor 740 may be carried out in various operating manners or mechanisms.

For example, the fastening or separation between the shaft 710 and the power connector 520 is carried out by means of a locking device like a latch which pulls upwardly and fixes the shaft 710 to which the elastic force is applied downwardly. Otherwise, a bolt type member is movable upwardly and downwardly through its independent rotation in the state of being contacted with the other end of the shaft 710, so that as the shaft 710 is moved upwardly and downwardly, it is fastened and separated to/from the power connector 520.

According to the present invention, the adjustor 740 includes an operating member 750, an adjusting guide 760 and an adjusting drum 770.

The operating member 750 is a part coupled to the other end of the shaft 710 in such a manner as to be rotatable independently of each other and has an operating protrusion 752 formed on one side thereof so as to induce the upward and downward movements of the shaft 710.

The adjusting guide 760 is a part for guiding the upward and downward movements of the operating member 750 and has a shape of a cylinder penetrated up and down so as to accommodate the operating member 750 thereinto and an adjusting guide groove 762 formed on one side thereof so as to insert the operating protrusion 752 thereinto, thus conducting the upward and downward movements of the operating member 750 through the adjusting guide 760.

The adjusting drum 770 moves up the operating member 750 according to its left and right rotation and maintains the upwardly moved state of the operating member 750. The adjusting drum 770 includes an inclined surface 772 and an ascending fixing projection 774. The adjusting drum 770 has a shape of a cylinder penetrated up and down and is rotatable in left and right sides in the state where the adjusting guide 760 is inserted into the inside thereof.

The inclined surface 722 is formed on one side of the top end periphery of the adjusting drum 770 and moves up and down the operating protrusion 752 guided by the adjusting guide groove 762 in accordance with the left and right rotation of the adjusting drum 770. That is, the widths of the upward and downward movements of the shaft 710 can be adjusted through the adjustment of the height of the inclined surface 772.

The ascending fixing projection 774 serves to fix the operating protrusion 752 in the state where the operating protrusion 752 is moved up and is formed in parallel with the horizontal plane so as to mount the operating protrusion 752 at the uppermost end of the inclined surface 772, and otherwise, it may be formed at the location adjacent to the inclined surface 772.

On the other hand, the operating member 750, the adjusting guide 760 and the adjusting drum 770 of the adjustor 740 may be made with a symmetrical structure in the left and right sides thereof, thus allowing the upward and downward adjustments of the shaft 710 to be easily and stably conducted.

That is, the operating protrusion 752 formed on one side of the operating member 750 is formed on the other side thereof, so that two operating protrusions 752 are formed symmetrically in left and right sides (See FIGS.2a and 2b). Furthermore, four operating protrusions 752 may be formed symmetrically in left and right sides. At this time, the adjusting guide groove 762 of the adjusting guide 760 and the inclined surface 772 and the ascending fixing projection 774 of the adjusting drum 770 are changed to an operative structure corresponding to the plurality of operating protrusions 752 formed symmetrically in left and right sides, and accordingly, the shaft 710 is moved upwardly and downwardly and fixed in more easily and stably manners.

Referring to FIG.2b, an explanation on the operation of the adjustor 740 will be given. If the adjusting drum 770 is rotated in a clockwise direction, the operating protrusions 752 are raised vertically along the inclined surfaces 772 by means of the guide of the adjusting guide grooves 762. If the adjusting drum 770 is kept rotated in the clockwise direction, the operating protrusions 752 fixedly reach the ascending fixing projections 774. Through the mechanism, the shaft 710 is moved up and finally fixed.

In the state where the shaft 710 is moved up and finally fixed, the juice squeezing drum 200 can be easily mounted on the juice squeezing drum seating part 120, and after mounting, if the adjusting drum 770 is rotated in a counterclockwise direction, the shaft 710 is automatically moved down and fastened to the power connector 520 of the screw 500 by means of the elastic force of the spring 730.

After that, if the driving motor 110 is rotated through a power switch (not shown), speed reduction is appropriately conducted through the power transmission module 600, and the driving motor 110 and the screw 500 are connected dynamically to each other, thus conducting juice extraction. If the polygonal-shaped shaft is always fitted smoothly to the polygonal-shaped shaft hole, the spring 730 is not needed, but since such smooth fitting is rarely conducted in practical use, the spring 730 is provided to allow the polygonal-shaped shaft to be well fitted to the polygonal-shaped shaft hole.

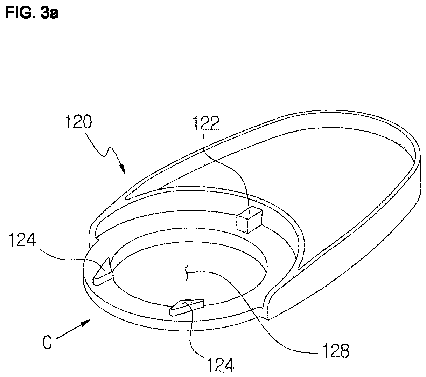

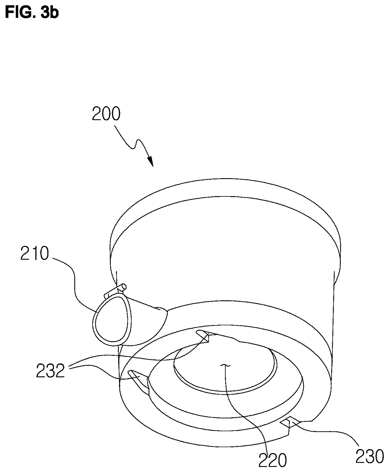

As shown in FIGS.3a and 3b, the juice squeezing drum 200 and the juice squeezing drum seating part 120 should be firmly fixed to each other, without any gap, thus preventing the shaking of the juice squeezing drum 200 while the juice extraction is being carried out.

So as to firmly fix the juice squeezing drum 200 and the juice squeezing drum seating part 120 to each other, according to the present invention, the juice squeezing drum seating part 120 has a coupling projection 122 and coupling guide projections 124 formed on one side of the top surface thereof, and the juice squeezing drum 200 has a coupling groove 230 and coupling guide grooves 232 formed on one side of the underside thereof. To the contrary, the juice squeezing drum seating part 120 may have a coupling groove and coupling guide grooves formed on one side of the top surface thereof, and the juice squeezing drum 200 may have a coupling projection and coupling guide projections formed on one side of the underside thereof.

That is, the coupling projection 122 of the juice squeezing drum seating part 120 is fitted to the coupling groove 230 of the juice squeezing drum 200 corresponding thereto. So as to allow the coupling projection 122 to be easily fitted to the coupling groove 230, at this time, chamfering is conducted for their edges contacted with each other.

Further, the coupling guide projections 124 of the juice squeezing drum seating part 120 are increased in their protruding widths in an insertion direction of 'C' of the juice squeezing drum 200, and the coupling guide grooves 232 having the position and shape corresponding to the coupling guide projections 124 are formed on the underside of the juice squeezing drum 200 and coupled to the coupling guide projections 124.

In this case, upon the vertical insertion of the juice squeezing drum 200 into the juice squeezing drum seating part 120 in the insertion direction of 'C', the coupling guide projections 124 serve to guide such gentle mounting for the juice squeezing drum 200. In the same manner as above, chamfering is conducted for their edges contacted with each other.

According to the present invention, the coupling projection 122 is formed at the inside of the juice squeezing drum seating part 120 which is far away from the insertion position C of the juice squeezing drum 200, and the coupling guide projections 124 are formed on the left and right positions from the center of the juice squeezing drum seating part 120.

The coupling structure between the top surface of the juice squeezing drum seating part 120 and the underside of the juice squeezing drum 200 enables the juice squeezing drum 200 to be smoothly and easily mounted on the juice squeezing drum seating part 120 and further allows the juice squeezing drum 200 to be rigidly fixed to the juice squeezing drum seating part 120 in every direction, thus achieving the operation of the juice squeezing extractor in a stable manner.

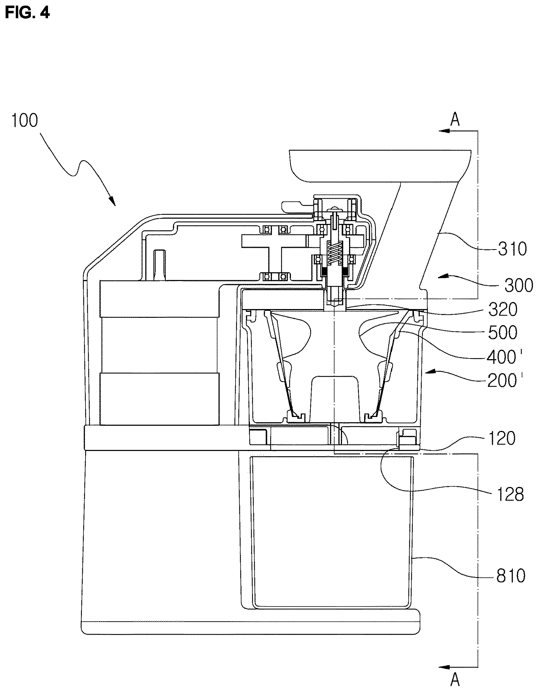

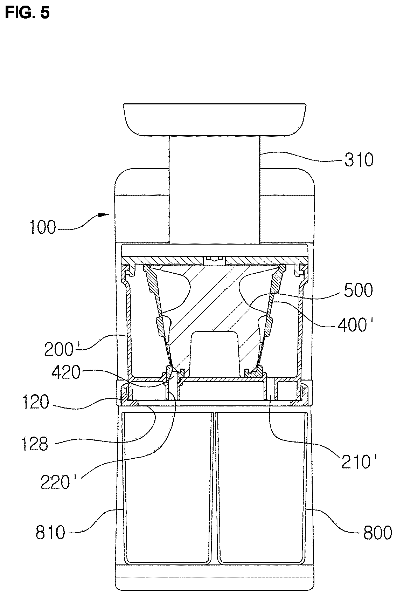

On the other hand, an upper powered type juice squeezing extractor according to a second embodiment of the present invention will be explained with reference to FIGS.4 to 6. According to the second embodiment of the present invention, a juice squeezing drum has a juice discharging hole and a remnant discharging hole formed on the underside thereof so as to just discharge juice and remnants downwardly therefrom. In this case, other parts in the second embodiment of the present invention which are the same as those in the first embodiment of the present invention will be not explained anymore, for the brevity of the description, and now, an explanation on the configuration of the juice squeezing drum and the screen drum will be given.

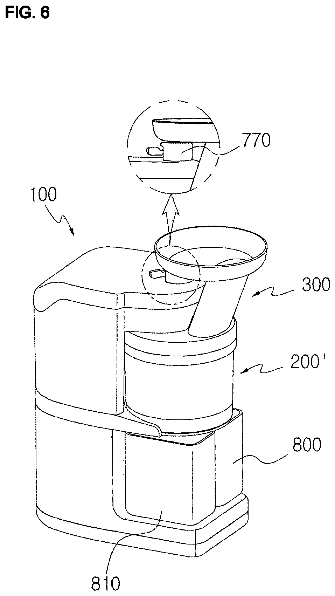

That is, as shown in FIGS.4 and 6, the juice squeezing drum 200' accommodates the screw 500 and a screen drum 400' thereinto. In this case, the screen drum 400' is adapted to surround the outer peripheral surface of the screw 500 and open on the top and underside thereof. The screen drum 400' becomes reduced in diameter as it goes toward the lower end periphery thereof. The screen drum 400' has a side peripheral wall having a plurality of screen holes adapted to allow the juice extracted through the compression and squeezing or grinding of the materials injected through the material injection hole 310 of the cap 300 by means of the rotation of the screw 500 to be discharged to the outside therefrom. The screen drum 400' has a ring-shaped bottom surface on the lower end periphery thereof and a remnant descending hole 420 formed on one side of the underside thereof, through which the remnants are discharged. Further, a packing or opening and closing means may be mounted on the remnant descending hole 420 or a remnant discharging hole 220' so as to control remnant discharging.

The juice squeezing drum 200' into which the screen drum 400' is mounted has a juice discharging hole 210' and the remnant discharging hole 220' spaced apart from each other on the underside thereof in such a manner as to be open downwardly. In more detail, the remnant discharging hole 220' is formed on the underside of the juice squeezing drum 200' at the region corresponding to the remnant descending hole 420 in such a manner as to communicate with the remnant descending hole 420 formed on the screen drum 400'. At this time, the remnant descending hole 420 is penetratedly formed downwardly from the underside of the juice squeezing drum 200'. The juice discharging hole 210' is spaced apart from the remnant discharging hole 220' on the underside of the juice squeezing drum 200'. The juice discharging hole 210' may be formed on the outside of the region where the screen drum 400' is mounted on the underside of the juice squeezing drum 200'. The juice discharging hole 210' is penetratedly formed downwardly from the underside of the juice squeezing drum 200' so as to discharge the juice discharged from the screen drum 400' after the materials injected into the juice squeezing drum 200' through the material injection hole 310 have been extracted.

At this time, the opening 128 formed on the juice squeezing drum seating part 120 is formed to a sufficiently large size so as to allow the juice squeezing drum seating part 120 to stably support the juice squeezing drum 200' and further to help juice or remnants well dropped from the juice discharging hole 210' or the remnant discharging hole 220', and in addition to the round shape, at this time, the opening 128 may be freely formed in various shapes.

Even though not shown, opening and closing means is additionally mounted on the juice discharging hole 210' so as to control the opening and closing of the juice discharging hole 210', thus controlling juice discharging.

Like this, the juice discharging hole 210' and the remnant discharging hole 220' are formed penetratedly downwardly on the underside of the juice squeezing drum 200', so that the juice and remnants are all discharged downwardly from the juice squeezing drum 200', and further, a juice collection container 800 and a remnant collection container 810 are disposed under the juice squeezing drum 200', thus increasing the space utilization under the juice squeezing drum 200'. While the juice squeezing extractor is being operated, in addition, the juice collection container 800 and the remnant collection container 810 are disposed under the juice squeezing drum 200', thus making a user feel that the juice squeezing extractor is well organized.

While the present invention has been described with reference to the particular illustrative embodiments, it is not to be restricted by the embodiments. It is to be appreciated that those skilled in the art can change or modify the embodiments without departing from the scope and spirit of the present invention.

## Claims

1. An upper powered type juice squeezing extractor comprising:
a body having driving force generating means and a juice squeezing drum seating part disposed on one side thereof;
a juice squeezing drum mounted on the juice squeezing drum seating part and open on the top surface thereof;
a cap adapted to cover the open top surface of the juice squeezing drum and having a communication hole formed at the center thereof;
a screw having a plurality of screw spiral lines formed on the outer peripheral surface thereof and a power connector disposed on the top end periphery thereof so as to receive a driving force generated from the driving force generating means; and
a power transmission module having one end connected to the driving force generating means and the other end connected to the power connector so as to transmit the driving force generated from the driving force generating means to the screw.

2. The upper powered type juice squeezing extractor according to claim 1, wherein the power transmission module comprises:
a plurality of combined gears disposed on one end thereof in such a manner as to be sequentially connected to a rotary shaft of the driving force generating means; and
an upwardly and downwardly movable elevating part mounted at the other end thereof in such a manner as to be fastened or separated to/from the power connector of the screw.

3. The upper powered type juice squeezing extractor according to claim 2, wherein the elevating part comprises:
a shaft having one end fastenable and separable to/from the power connector of the screw;
a shaft guide having shaft guide grooves formed on one side thereof so as to guide upward and downward movements of the shaft and gear teeth formed on the outer peripheral surface of the other side thereof so as to receive the driving force from the driving force generating means;
a spring having one end supported against the shaft and the other end supported against the shaft guide to allow the shaft to receive the elastic force thereof in a downward direction; and
an adjustor connected to the other end of the shaft passed through the shaft guide so as to adjust the fastening or separation between the shaft and the power connector.

4. The upper powered type juice squeezing extractor according to claim 3, wherein the adjustor comprises:
an operating member coupled to the other end of the shaft and having an operating protrusion formed on one side thereof so as to induce the upward and downward movements of the shaft;
an adjusting guide having an adjusting guide groove formed on one side thereof in such a manner as to insert the operating protrusion thereinto so as to guide the upward and downward movements of the operating member; and
an adjusting drum rotatable in the state of inserting the adjusting guide thereinto and having an inclined surface formed on one side of the top end periphery thereof in such a manner as to move up and down the operating protrusion in accordance with the left and right rotation thereof and an ascending fixing projection formed on the uppermost end of the inclined surface so as to move up and fix the operating protrusion.

5. The upper powered type juice squeezing extractor according to claim 4, wherein the operating member, the adjusting guide and the adjusting drum of the adjustor have a symmetrical structure in the left and right sides thereof.

6. The upper powered type juice squeezing extractor according to claim 1, wherein the juice squeezing drum seating part has one or more coupling projections or coupling grooves formed on the top surface thereof, and the juice squeezing drum has one or more coupling grooves or coupling projections formed on the underside thereof at the corresponding positions to the coupling projections or coupling grooves, so that the juice squeezing drum and the juice squeezing drum seating part are fastened to each other.

7. The upper powered type juice squeezing extractor according to claim 1, wherein the juice squeezing drum seating part has coupling guide projections formed on the top surface thereof, the coupling guide projections being increased in the protruding widths in an insertion direction of the juice squeezing drum, and the juice squeezing drum has coupling guide grooves formed on the underside thereof at the corresponding positions to the coupling guide projections.

8. The upper powered type juice squeezing extractor according to claim 1, wherein the cap has a material injection hole penetratedly formed therethrough so as to allow materials to be extracted to be injected into the juice squeezing drum, the material injection hole being inclinedly formed.

9. The upper powered type juice squeezing extractor according to claim 1, wherein the juice squeezing drum comprises: a remnant discharging hole formed at the center of the underside thereof in such a manner as to correspond to the lower end periphery of the screw disposed in the interior thereof; and a juice discharging hole formed on one side thereof.

10. The upper powered type juice squeezing extractor according to claim 1, wherein the juice squeezing drum comprises:
a screen drum accommodated thereinto and open on the top and underside thereof so as to surround the outer peripheral surface of the screw, the screen drum having a remnant descending hole formed on one side of the underside thereof; and
a remnant discharging hole formed on the underside thereof in such a manner as to communicate with the remnant descending hole.

11. The upper powered type juice squeezing extractor according to claim 10, wherein the remnant discharging hole is penetratedly formed downwardly from the underside of the juice squeezing drum.

12. The upper powered type juice squeezing extractor according to claim 10, wherein the juice squeezing drum has a juice discharging hole formed on the outside of the region where the screen drum is mounted on the underside thereof in such a manner as to be spaced apart from the remnant discharging hole.

13. The upper powered type juice squeezing extractor according to claim 12, wherein the juice discharging hole is penetratedly formed downwardly from the underside of the juice squeezing drum.

14. The upper powered type juice squeezing extractor according to claim 9 or 12, wherein the juice squeezing drum has opening and closing means mounted on the juice discharging hole so as to open and close the juice discharging hole.

15. The upper powered type juice squeezing extractor according to claim 10, wherein the screen drum or the juice squeezing drum has a packing or opening and closing means mounted on the remnant descending hole or the remnant discharging hole so as to control remnant discharging.
